# EUROPÄISCHE PATENTSCHRIFT

(11) **EP 3 271 194 B1**
(45) Veröffentlichungstag und Bekanntmachung des Hinweises auf die Patenterteilung: **08.05.2019**
(21) Anmeldenummer: 15807636.4
(22) Anmeldetag: 07.12.2015
(51) Int. Cl.: B60C 11/13, B60C 11/03

(54) **FAHRZEUGLUFTREIFEN**
PNEUMATIC VEHICLE TYRE
PNEUMATIQUE DE VÉHICULE

(30) Priorität: 19.03.2015 DE 102015205006
(43) Veröffentlichungstag der Anmeldung: 24.01.2018
(73) Patentinhaber: Continental Reifen Deutschland GmbH, 30165 Hannover (DE)
(72) Erfinder: KLEFFMANN, Jens, 30453 Hannover (DE); HODONOVA, Katarina, 01311 Liet. Lucka (SK); HÄRTWIG, Andreas, 30419 Hannover (DE)
(74) Vertreter: Finger, Karsten
(86) Internationale Anmeldenummer: PCT/EP2015/078763
(87) Internationale Veröffentlichungsnummer: WO 2016/146215

(56) Entgegenhaltungen:
- EP-A1- 2 639 084
- EP-A1- 2 682 282
- WO-A1-2011/121421

## Beschreibung

### Fahrzeugluftreifen

Die Erfindung betrifft einen Nutzfahrzeugreifen in Radialbauart mit einem Laufstreifen mit schulterseitigen Umfangsrillen, welche je eine schulterseitige Profilrippe laufstreifeninnenseitig begrenzen, und mit zumindest zwei mittleren Umfangsrillen im Laufstreifenbereich zwischen den schulterseitigen Umfangsrillen, wobei jede schulterseitige Umfangsrille eine durchschnittliche Tiefe und eine in einer in radialer Richtung ermittelten Tiefe von 4,5 mm gemessene durchschnittliche Breite und jede mittlere Umfangsrille eine von der durchschnittlichen Tiefe der schulterseitigen Umfangsrille abweichende durchschnittliche Tiefe sowie eine gegenüber der durchschnittlichen Breite jeder schulterseitigen Umfangsrille kleinere, ebenfalls in einer in radialer Richtung ermittelten Tiefe von 4,5 mm gemessene durchschnittliche Breite aufweist, wobei die durchschnittliche Breite jeder schulterseitigen Umfangsrille zumindest dem Zweifachen der durchschnittlichen Breite jener mittleren Umfangsrille entspricht, welche die größte durchschnittliche Breite von allen mittleren Umfangsrillen aufweist.

Es ist bekannt und üblich, zur Reduzierung des Rollwiderstandes von Fahrzeugluftreifen das Profilleervolumen des Laufstreifens, den Negativanteil, möglichst gering zu halten. Dabei ist es üblich, den Laufstreifen mit unterschiedlich breiten Umfangsrillen auszustatten, wobei im Allgemeinen die in den schulterseitigen Bereichen des Laufstreifens verlaufenden Umfangsrillen breiter als die im mittleren Bereich des Laufstreifens verlaufenden Umfangsrillen sind.

Ein Nutzfahrzeugreifen der eingangs genannten Art ist beispielsweise aus der EP 2 639 084 A1 bekannt. Die mittleren Umfangsrillen weisen an der Laufstreifenperipherie eine Breite von 2,0 mm bis 8,0 mm, die schulterseitigen Umfangsrillen weisen an der Laufstreifenperipherie eine Breite von 8,0 mm bis 14,0 mm auf. Bevorzugter Weise beträgt die Breite jeder schulterseitigen Umfangsrille zumindest dem 1,75-Fachen der Breite der mittleren Umfangsrillen. Die Tiefe der mittleren Umfangsrillen und die Tiefe der schulterseitigen Umfangsrillen betragen jeweils 15,0 mm bis 20,0 mm. Die Rillenflanken der Umfangsrillen weisen, im Querschnitt betrachtet, einen radial inneren Abschnitt auf, welcher zur radialen Richtung höchstens unter einem Winkel von 1° verläuft. Ein derart ausgeführter Nutzfahrzeugreifen soll einen geringeren Rollwiderstand und gute Bremseigenschaften auf nasser Fahrbahn aufweisen.

Die EP 2 682 282 A1 offenbart einen Nutzfahrzeugreifen mit einem Laufstreifen mit Umfangsrillen mit einem im Querschnitt entlang eines Radius gerundeten Rillengrundes. Bei mittleren Umfangsrillen beträgt das Verhältnis des Radius des Rillengrundes zur Tiefe der Umfangsrille höchstens 0,139, bei schulterseitigen Umfangsrillen ist das Verhältnis des Radius des Rillengrundes zur Tiefe der Umfangsrillen größer als 0,195. Diese Verhältnisse sollen sich vorteilhaft auf den Rollwiderstand und die Rissbeständigkeit im Bereich der Umfangsrillen auswirken.

Aus der WO 2013/000671 A1 ist ein Nutzfahrzeugreifen bekannt, welcher einen Laufstreifen mit schulterseitigen Umfangsrillen und zwischen diesen im mittleren Laufstreifenbereich angeordneten mittleren Umfangsrillen aufweist, wobei die Tiefen sämtlicher Umfangsrillen 9,0 mm bis 14,0 mm betragen und die schulterseitigen Umfangsrillen vorzugsweise um mindestens 2,0 mm tiefer sind als die mittleren Umfangsrillen. Die mittleren Umfangsrillen weisen eine Breite von 1,0 mm bis 4,0 mm, die schulterseitigen Umfangsrillen eine Breite von 1,0 mm bis 15,0 mm auf, wobei die Breiten jeweils in einer Entfernung von 3,5 mm von der Laufstreifenoberfläche ermittelt werden. Dieser Nutzfahrzeugreifen weist ferner innerhalb seiner mittleren Profilrippen mindestens 120 über seinen Reifenumfang verteilte Querrillen auf. Ein derartiger Nutzfahrzeugreifen soll einen guten Nassgriff und einen geringen Rollwiderstand aufweisen.

Aus der EP 2 558 310 B1 ist ein Nutzfahrzeugreifen bekannt, dessen Laufstreifen schulterseitig je eine die Bodenaufstandsfläche verringernde in Umfangsrichtung umlaufende nutartige Ausnehmung aufweist. Der Laufstreifen weist ferner ein Bruttovolumen auf, welches von der die tiefste Umfangsrille von radial innen berührenden Einhüllenden gemeinsam mit der Laufstreifenperipherie und den beiden schulterseitigen Flankenabschnitten des Laufstreifens eingeschlossen wird. Das Bruttovolumen entspricht daher der Summe des entsprechend eingeschlossenen Gummivolumens und des Rillenleervolumens sämtlicher Umfangsrillen. Der Anteil des Rillenleervolumens am Bruttovolumen beträgt zwischen 10% und 20%. Jede mittlere Umfangsrille weist ein Volumen auf, welches wenigstens dem Dreifachen des Volumens einer schulterseitigen Umfangsrille entspricht. Die Tiefen der Umfangsrillen betragen jeweils 10 mm bis 25 mm. Diese Maßnahmen sollen den Rollwiderstand des Reifens verringern.

Ein weiterer Nutzfahrzeugreifen, dessen Rollwiderstand gering sein soll, ist in der EP 2 292 448 B1 offenbart. Das Rillenleervolumen sämtlicher Umfangsrillen des Laufstreifens beträgt 1% bis 10% des Bruttovolumens. Der Laufstreifen des Reifens kann dabei sowohl schmale Umfangsrillen mit einer an der Laufstreifenoberfläche ermittelten Breite von 0,5 mm bis 3,0 mm als auch breite Umfangsrillen mit einer Breite von 5,0 mm bis 20,0 mm aufweisen, wobei die Tiefe sämtlicher Umfangsrillen jeweils 10,0 mm bis 25,0 mm beträgt. Gemäß einer bevorzugten Ausführungsform weist der Laufstreifen zwei breite schulterseitig verlaufende Umfangsrillen und drei zwischen diesen im mittleren Laufstreifenbereich verlaufende schmale Umfangsrillen auf.

Werden breitere Umfangsrillen in den Schulterbereichen des Laufstreifens vorgesehen, sind die schulterseitigen Profilrippen in der Bodenaufstandsfläche bei Belastung des Reifens, auf Grund der in diesen Bereichen erhöhten radialen Flächenpressung besonders stark beansprucht. Dies führt zu einer Verlängerung bzw. Ausdehnung der Bodenaufstandsfläche in die Schulterbereiche des Laufstreifens, wodurch diese Laufstreifenbereiche im Vergleich zum mittleren Laufstreifenbereich im Betrieb stärker abgerieben werden und ein ungleichmäßiger Abrieb über die Breite des Laufstreifens auftritt.

Der Erfindung liegt daher die Aufgabe zugrunde, einen Nutzfahrzeugreifen der eingangs genannten Art, insbesondere einen LKW- oder Busreifen, derart zu gestalten, dass der Abrieb des Laufstreifens möglichst gleichmäßig ist, wobei gleichzeitig der Rollwiderstand gering bleiben soll.

Die gestellte Aufgabe wird erfindungsgemäß dadurch gelöst, dass die durchschnittliche Tiefe jeder schulterseitigen Umfangsrille um 0,8 mm bis 2,0 mm kleiner ist als die durchschnittliche Tiefe der mittleren Umfangsrille(n) mit der größten durchschnittlichen Tiefe.

Dadurch, dass die Tiefe jeder schulterseitigen Umfangsrille kleiner ist als die durchschnittliche Tiefe der mittleren Umfangsrillen, werden die an die schulterseitigen Umfangsrillen angrenzenden schulterseitigen Profilrippen radial versteift. Die weiteren, die Breiten und die Rillenleervolumina betreffenden Massnahmen verstärken diesen Effekt. Dadurch ändert sich die Form der Bodenaufstandsfläche des Laufstreifens, indem die Umfangslänge der Bodenaufstandsfläche etwas geringer wird. Durch die erwähnte Versteifung wird schulterseitig die radiale Flächenpressung reduziert. Diese Effekte bewirken eine deutliche Verbesserung des Abriebbildes, der Laufstreifen reibt gleichmäßiger ab.

Das Ausmaß der Verbesserung des Abriebbildes kann durch bestimmte Ausführungsvarianten der Erfindung vorteilhaft beeinflusst werden, wobei die einzelnen Massnahmen auf die erwünschte geometrische Ausgestaltung des Laufstreifenprofils, insbesondere der Umfangsrillen, abgestimmt werden können.

Zu diesen bevorzugten und vorteilhaften Maßnahmen gehört, dass die durchschnittliche Tiefe jeder schulterseitigen Umfangsrille um 1,0 mm bis 1,8 mm, geringer ist als die durchschnittliche Tiefe der mittleren Umfangsrillen(n) mit der größten durchschnittlichen Tiefe.

Bei einer weiteren bevorzugten Ausführungsvariante der Erfindung entspricht das Rillenleervolumen jeder schulterseitigen Umfangsrille mindestens dem 2,4- bis 4-Fachen des Rillenleervolumens der mittleren Umfangsrille mit dem größten Rillenleervolumen.

Die erfindungsgemäßen Maßnahmen lassen sich besonders gut in Laufstreifenprofilen von Nutzfahrzeugreifen umsetzen, bei welchen die mittleren Umfangsrillen übereinstimmende durchschnittliche Tiefen aufweisen, insbesondere bei solchen, bei welchen die mittleren Umfangsrillen über ihren Umfang jeweils konstante Tiefen besitzen. Dabei ist es ferner besonders vorteilhaft, wenn die mittleren Umfangsrillen auch übereinstimmende durchschnittliche Breiten aufweisen.

Bei einer weiteren bevorzugten Ausführungsform weisen die schulterseitigen Umfangsrillen gleiche durchschnittliche Tiefen, insbesondere über ihren Umfang konstante Tiefen, auf.

Weitere Merkmale, Vorteile und Einzelheiten der Erfindung werden nun anhand der schematischen Zeichnung, die mehrere Ausführungsbeispiele darstellt, näher beschrieben.

Dabei zeigen
Fig. 1 einen schematischen Querschnitt durch einen Nutzfahrzeugreifen mit einer Ausführungsform gemäß der Erfindung,
Fig. 2 bis Fig. 5 Ausführungsbeispiele von Umfangsrillenquerschnitten und
Fig. 6 eine Ansicht eines Umfangsabschnittes einer möglichen Ausführungsform einer Umfangsrille.

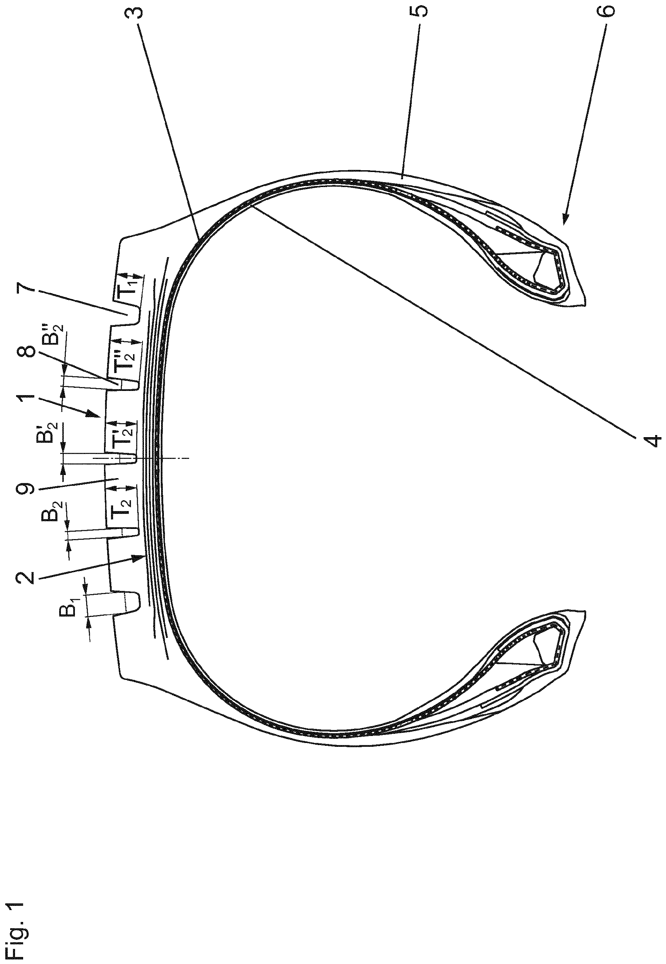

In Fig. 1 sind von den üblichen Bauteilen eines Nutzfahrzeugreifens in Radialbauart, insbesondere eines LKW- oder Busreifens, ein Laufstreifen 1, ein vierlagiger Gürtelverband 2, eine mit Festigkeitsträgern verstärkte Radialkarkasse 3, eine luftdichte Innenschicht 4, Seitenwände 5 sowie Wulstbereiche 6 mit Wulstkernen, Kernprofilen, Hornprofilen und den weiteren üblicherweise in den Wulstbereichen 6 vorgesehenen Verstärkungslagen dargestellt.

Der in Fig. 1 gezeigte Laufstreifen 1 weist fünf Umfangsrillen auf, zwei schulterseitige Umfangsrillen 7 und drei weitere im mittleren Bereich des Laufstreifens 1 verlaufende mittlere Umfangsillen 8. Die Gesamtanzahl der Umfangsrillen beträgt mindestens vier und kann auch mehr als fünf betragen. Die Umfangsrillen 7, 8 verlaufen vorzugsweise im Wesentlichen gerade in Umfangsrichtung, können jedoch auch zick-zack- oder wellenförmig verlaufen oder zick-zack- oder wellenförmig verlaufende Abschnitte aufweisen.

Die Umfangsrillen 7, 8 gliedern den Laufstreifen 1 in Profilrippen 9, wobei im Rahmen der gegenständlichen Erfindung unter einer Profilrippe sowohl eine Klotzreihe bestehend aus in Umfangsrichtung aufeinanderfolgenden Profilklötzen, welche durch Querrillen oder schmale Einschnitte voneinander getrennt sind, als auch ein in Umfangsrichtung umlaufendes Profilband, welches mit schmalen Einschnitten, Rillen, Sacknuten und dergleichen versehen ist, welche innerhalb des Profilbandes enden können, verstanden wird.

Jede schulterseitige Umfangsrille 7 und jede mittlere Umfangsrille 8 weisen am Rillengrund jeweils ihre größte Tiefe auf, die üblicherweise über den Umfang der jeweiligen Umfangsrille 7, 8 konstant ist, abgesehen von lokal begrenzten seichteren Stellen bei Treadwearindikatoren und tieferen Stellen bei Tiefenindikatoren. Jede schulterseitige Umfangsrille 7 weist entlang der tiefsten Stellen des Rillengrundes eine durchschnittliche Tiefe T₁, jede mittlere Umfangsrille 8 entlang der tiefsten Stellen des Rillengrundes eine durchschnittliche Tiefe T₂, T₂', T₂" auf. Die durchschnittlichen Tiefen T₁ sowie T₂, T₂', T₂" entsprechen bei Umfangsrillen 7, 8, die eine über ihren Umfang konstante größte Tiefe - Tiefe an der tiefsten Stelle im Rillenquerschnitt - aufweisen, dieser Tiefe. Die durchschnittlichen Tiefen T₁ sowie T₂, T₂', T₂" entsprechen bei Umfangsrillen 7, 8, die eine über ihren Umfang variierende Tiefe aufweisen, der durchschnittlichen Tiefe entlang der tiefsten Stellen am Rillengrund über den Umfang. Die durchschnittliche Tiefen T₁ sowie T₂, T₂', T₂" ergeben sich als Mittelwert von 300 bis 500 von einander gleich beabstandeten Messstellen in einem Umfangsabschnitt von 30 cm Länge, wobei Treadwearindikatoren und tiefere Stellen bei Tiefenindikatoren unberücksichtigt bleiben. Bei der Erfindung ist die durchschnittliche Tiefe T₂, T₂', T₂" von zumindest zwei mittleren Umfangsrillen 8 größer als die durchschnittliche Tiefe T₁ jeder schulterseitigen Umfangsrille 7. Sind nur zwei mittlere Umfangsrillen 8 vorgesehen so gilt diese Bestimmung für diese beiden Umfangsrillen 8. Die mittleren Umfangsrillen 8 können gleiche oder auch voneinander unterschiedliche durchschnittliche T₂, T₂', T₂" aufweisen, wobei die durchschnittlichen Tiefen T₂, T₂', T₂" 8,0 mm bis 18,0 mm, insbesondere 10,0 mm bis 16,0 mm, betragen.

Die durchschnittliche Tiefe T₁ jeder schulterseitigen Umfangsrille 7 ist um 0,7 mm bis 4,0 mm, vorzugsweise 0,8 mm bis 2,0 mm, und besonders bevorzugt 1,0 mm bis 1,8 mm geringer als die durchschnittliche Tiefe T₂, T₂', T₂" der mittleren Umfangsrille(n) 8 mit der größten durchschnittlichen Tiefe T₂, T₂', T₂".

Jede schulterseitige Umfangsrille 7 weist eine über ihren Umfang ermittelte durchschnittliche Breite B₁ auf, jede mittlere Umfangsrille 8 weist eine über ihren Umfang ermittelte durchschnittliche Breite B₂, B₂', B₂" auf, wobei die durchschnittlichen Breiten B₁ und B₂, B₂', B₂" in der jeweiligen Umfangsrille 7, 8 in einer in radialer Richtung ermittelten Tiefe von 4,5 mm gemessen werden. Abschnitte der Umfangsrillen 7, 8, wo in die Umfangsrillen 7, 8 Querrillen, Einschnitte und dergleichen einmünden, bleiben unberücksichtigt. Die durchschnittliche Breite B₁ jeder schulterseitigen Umfangsrille 7 beträgt beispielsweise 6,0 mm. Die durchschnittliche Breite B₁ jeder schulterseitigen Umfangsrille 7 ist zumindest das Zweifache der durchschnittlichen Breite B₂, B₂', B₂" jener mittleren Umfangsrille 8, welche die größte durchschnittliche Breite B₂, B₂', B₂" von allen mittleren Umfangsrillen 8 aufweist. Die durchschnittlichen Breiten B₁ und B₂, B₂', B₂" ergeben sich als Mittelwert von 300 bis 500 von einander gleich beabstandeten Messstellen in einem Umfangsabschnitt von 30 cm Länge, wobei Stellen, an welchen Querrillen, Einschnitte und dergleichen einmünden, unberücksichtigt bleiben.

Die erwähnten durchschnittlichen Breiten und durchschnittliche Tiefen können beispielsweise durch eine computertomographische Vermessung ermittelt werden.

Bei einer bevorzugten Ausführungsvariante der Erfindung, zusätzlich zu den beschriebenen Maßnahmen hinsichtlich der Breiten B₁ und B₂, B₂', B₂" weist jede schulterseitige Umfangsrille 7 ein Rillenleervolumen V₁, jede mittlere Umfangsrille 8 ein Rillenleervolumen V₂ auf. Die Rillenleervolumina V₂ der mittleren Umfangsrillen 8 und die Rillenleervolumina V₂ der schulterseitigen Umfangsrillen 7 können jeweils voneinander unterschiedlich sein. Unter "Rillenleervolumen" wird das zwischen den Rillenbegrenzungen, etwa Rillenflanken und Rillengrund, und einer Einhüllenden an der Laufstreifenoberfläche vorhandene Volumen (Luftvolumen) verstanden. Bei Querrillen, Einschnitten und dergleichen, die in die jeweilige Umfangsrille 7, 8 einmünden, wird als "Begrenzung" eine in radialer Richtung verlaufende virtuelle Rillenflanke angenommen. Das Rillenleervolumen V₁ jeder schulterseitigen Umfangsrille 7 entspricht mindestens dem Zweifachen, insbesondere dem 2,4- bis Vierfachen, des Rillenleervolumens der mittleren Umfangsrille 8 mit dem größten Rillenleervolumen.

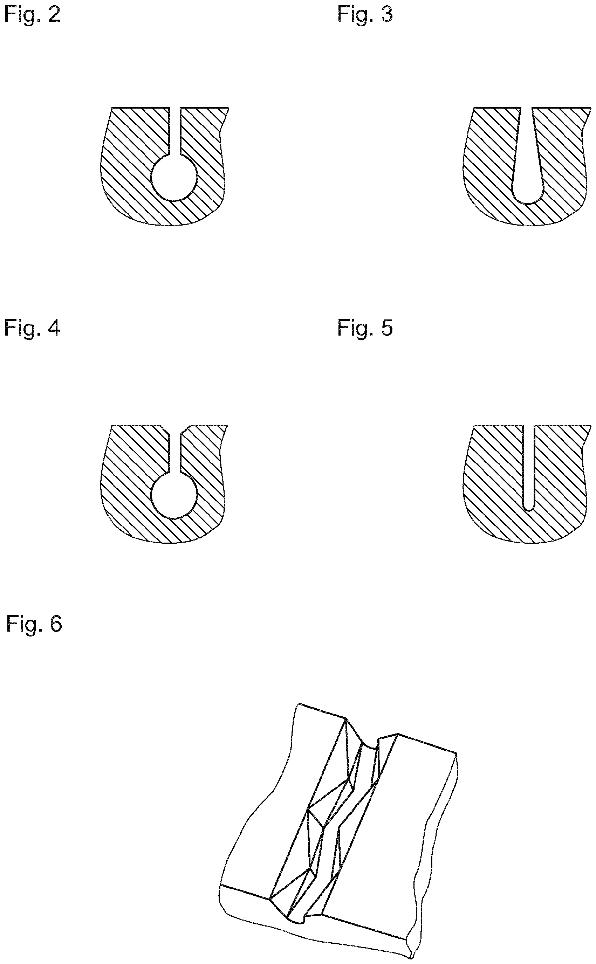

In Fig. 1 sind die Umfangsrillen mit einem im Wesentlichen U-förmigen Querschnitt dargestellt. Die Umfangsrillen können beliebige Querschnitte aufweisen und auch Rillenflanken mit Vorsprüngen und dergleichen aufweisen. Die Figuren 2 bis 5 zeigen beispielhaft mögliche Querschnitte von Umfangsrillen, die sowohl schulterseitige als auch mittlere Umfangsrillen sein können. Fig. 6 zeigt beispielhaft einen Abschnitt einer Umfangsrille, die sowohl eine schulterseitige als auch mittlere Umfangsrille sein kann, mit Vorsprüngen an den Rillenflanken.

### Bezugsziffernliste

- 1: Laufstreifen
- 2: Gürtelverband
- 3: Radialkarkasse
- 4: Innenschicht
- 5: Seitenwand
- 6: Wulstbereich
- 7: schulterseitige Umfangsrille
- 8: mittlere Umfangsrille
- 9: Profilrippe
- B₁, B₂, B₂', B₂": Breite
- T₁, T₂, T₂',T₂": Tiefe

## Patentansprüche

1. Nutzfahrzeugreifen in Radialbauart mit einem Laufstreifen (1) mit schulterseitigen Umfangsrillen (7), welche je eine schulterseitige Profilrippe (9) laufstreifeninnenseitig begrenzen, und mit zumindest zwei mittleren Umfangsrillen (8) im Laufstreifenbereich zwischen den schulterseitigen Umfangsrillen (7), wobei jede schulterseitige Umfangsrille (7) eine durchschnittliche Tiefe (T₁) und eine in einer in radialer Richtung gemessene Tiefe von 4,5 mm ermittelte durchschnittliche Breite (B₁) und jede mittlere Umfangsrille (8) eine von der durchschnittlichen Tiefe (T₁) der schulterseitigen Umfangsrille (7) abweichende durchschnittliche Tiefe (T₂, T₂', T₂") sowie eine gegenüber der durchschnittlichen Breite (B₁) jeder schulterseitigen Umfangsrille (7) kleinere, ebenfalls in einer in radialer Richtung ermittelten Tiefe von 4,5 mm gemessene durchschnittliche Breite (B₂, B₂', B₂") aufweist,
wobei die durchschnittliche Breite (B₁) jeder schulterseitigen Umfangsrille (7) zumindest dem Zweifachen der durchschnittlichen Breite (B₂, B₂', B₂") jener mittleren Umfangsrille (8) entspricht, welche die größte durchschnittliche Breite (B₂, B₂', B₂") von allen mittleren Umfangsrillen (8) aufweist,
**dadurch gekennzeichnet,**
**dass** die durchschnittliche Tiefe (T₁) jeder schulterseitigen Umfangsrille (7) um 0,8 mm bis 2,0 mm kleiner ist als die durchschnittliche Tiefe (T₂, T₂', T₂") der mittleren Umfangsrille(n) (8) mit der größten durchschnittlichen Tiefe (T₂, T₂', T₂").

2. Nutzfahrzeugreifen nach Anspruch 1, **dadurch gekennzeichnet, dass** die Tiefe (T₁) der schulterseitigen Umfangsrille (7) um 1,0 mm bis 1,8 mm geringer ist als die durchschnittliche Tiefe (T₂, T₂', T₂") der mittleren Umfangsrille(n) (8) mit der größten durchschnittlichen Tiefe (T₂, T₂', T₂").

3. Nutzfahrzeugreifen nach Anspruch 1 oder 2, **dadurch gekennzeichnet, dass** das Rillenleervolumen (V₁) jeder schulterseitigen Umfangsrille (7) mindestens dem Zweifachen des Rillenleervolumens (V₂) der mittleren Umfangsrille (8) mit dem größten Rillenleervolumen (V₂) entspricht.

4. Nutzfahrzeugreifen nach Anspruch 3, **dadurch gekennzeichnet, dass** Rillenleervolumen (V₁) jeder schulterseitigen Umfangsrille (7) mindestens dem 2,4-bis Vierfachen des Rillenleervolumens (V₂) der mittleren Umfangsrille (8) mit dem größten Rillenleervolumen (V₂) entspricht.

5. Nutzfahrzeugreifen nach einem der Ansprüche 1 bis 4, **dadurch gekennzeichnet, dass** die mittleren Umfangsrillen (8) übereinstimmende durchschnittliche Tiefen (T₂, T₂', T₂") aufweisen.

6. Nutzfahrzeugreifen nach einem der Ansprüche 1 bis 5, **dadurch gekennzeichnet, dass** die mittleren Umfangsrillen (8) über ihren Umfang jeweils konstante Tiefen (T₂, T₂', T₂") aufweisen.

7. Nutzfahrzeugreifen nach einem der Ansprüche 1 bis 6, **dadurch gekennzeichnet, dass** die mittleren Umfangsrillen (8) übereinstimmende durchschnittliche Breiten (B₂, B₂', B₂") aufweisen.

8. Nutzfahrzeugreifen nach einem der Ansprüche 1 bis 7, **dadurch gekennzeichnet, dass** die schulterseitigen Umfangsrillen (8) übereinstimmende durchschnittliche Tiefen (T₁) aufweisen.

9. Nutzfahrzeugreifen nach einem der Ansprüche 1 bis 8, **dadurch gekennzeichnet, dass** die schulterseitigen Umfangsrillen (8) über ihren Umfang konstante Tiefen (T₁) aufweisen.

## Claims

1. Utility vehicle tyre of radial type of construction having a tread (1) with shoulder-side circumferential channels (7) which delimit in each case one shoulder-side profile rib (9) at a tread inner side, and having at least two middle circumferential channels (8) in the tread region between the shoulder-side circumferential channels (7), wherein each shoulder-side circumferential channel (7) has an average depth (T₁) and an average width (B₁) determined at a depth of 4.5 mm measured in a radial direction, and each middle circumferential channel (8) has an average depth (T₂, T₂', T₂") which differs from the average depth (T₁) of the shoulder-side circumferential channel (7) and an average width (B₂, B₂', B₂") which is smaller than the average width (B₁) of each shoulder-side circumferential channel (7) and which is likewise measured at a depth of 4.5 mm determined in a radial direction,
wherein the average width (B₁) of each shoulder-side circumferential channel (7) corresponds to at least two times the average width (B₂, B₂', B₂") of that middle circumferential channel (8) which has the greatest average width (B₂, B₂', B₂") of all of the middle circumferential channels (8),
**characterized**
**in that** the average depth (T₁) of each shoulder-side circumferential channel (7) is smaller, by 0.8 mm to 2.0 mm, than the average depth (T₂, T₂', T₂") of the middle circumferential channel(s) (8) with the greatest average depth (T₂, T₂', T₂").

2. Utility vehicle tyre according to Claim 1, **characterized in that** the depth (T₁) of the shoulder-side circumferential channel (7) is smaller, by 1.0 mm to 1.8 mm, than the average depth (T₂, T₂', T₂") of the middle circumferential channel(s) (8) with the greatest average depth (T₂, T₂', T₂").

3. Utility vehicle tyre according to Claim 1 or 2, **characterized in that** the channel empty volume (V₁) of each shoulder-side circumferential channel (7) corresponds to at least two times the channel empty volume (V₂) of the middle circumferential channel (8) with the greatest channel empty volume (V₂).

4. Utility vehicle tyre according to Claim 3, **characterized in that** the channel empty volume (V₁) of each shoulder-side circumferential channel (7) corresponds to at least 2.4 to four times the channel empty volume (V₂) of the middle circumferential channel (8) with the greatest channel empty volume (V₂).

5. Utility vehicle tyre according to any of Claims 1 to 4, **characterized in that** the middle circumferential channels (8) have corresponding average depths (T₂, T₂', T₂").

6. Utility vehicle tyre according to any of Claims 1 to 5, **characterized in that** the middle circumferential channels (8) have depths (T₂, T₂', T₂") which are in each case constant over their circumference.

7. Utility vehicle tyre according to any of Claims 1 to 6, **characterized in that** the middle circumferential channels (8) have corresponding average widths (B₂, B₂', B₂").

8. Utility vehicle tyre according to any of Claims 1 to 7, **characterized in that** the shoulder-side circumferential channels (8) have corresponding average depths (T₁).

9. Utility vehicle tyre according to any of Claims 1 to 8, **characterized in that** the shoulder-side circumferential channels (8) have depths (T₁) which are constant over their circumference.

## Revendications

1. Pneumatique de véhicule utilitaire de construction radiale comprenant une bande de roulement (1) avec des rainures périphériques du côté de l'épaulement (7), qui délimitent à chaque fois du côté intérieur de la bande de roulement une nervure profilée du côté de l'épaulement (9), et comprenant au moins deux rainures périphériques centrales (8) dans la région de la bande de roulement entre les rainures périphériques du côté de l'épaulement (7), chaque rainure périphérique du côté de l'épaulement (7) présentant une profondeur moyenne (T₁) et une largeur moyenne (B₁) déterminée à une profondeur de 4,5 mm mesurée dans la direction radiale, et chaque rainure périphérique centrale (8) présentant une profondeur moyenne (T₂, T₂', T₂") différente de la profondeur moyenne (T₁) de la rainure périphérique du côté de l'épaulement (7) ainsi qu'une largeur moyenne (B₂, B₂', B₂") plus petite que la largeur moyenne (B₁) de chaque rainure périphérique du côté de l'épaulement (7), également mesurée à une profondeur de 4,5 mm déterminée dans la direction radiale,
la largeur moyenne (B₁) de chaque rainure périphérique du côté de l'épaulement (7) correspondant au moins au double de la largeur moyenne (B₂, B₂', B₂") de la rainure périphérique centrale (8) qui présente la plus grande largeur moyenne (B₂, B₂', B₂") parmi toutes les rainures périphériques centrales (8),
**caractérisé en ce que**
la profondeur moyenne (T₁) de chaque rainure périphérique du côté de l'épaulement (7) est inférieure de 0,8 mm à 2,0 mm à la profondeur moyenne (T₂, T₂', T₂") de la ou des rainures périphériques centrales (8) ayant la plus grande profondeur moyenne (T₂, T₂', T₂").

2. Pneumatique de véhicule utilitaire selon la revendication 1, **caractérisé en ce que** la profondeur (T₁) de la rainure périphérique du côté de l'épaulement (7) est inférieure de 1,0 mm à 1,8 mm à la profondeur moyenne (T₂, T₂', T₂") de la ou des rainures périphériques centrales (8) ayant la plus grande profondeur moyenne (T₂, T₂', T₂").

3. Pneumatique de véhicule utilitaire selon la revendication 1 ou 2, **caractérisé en ce que** le volume à vide des rainures (V₁) de chaque rainure périphérique du côté de l'épaulement (7) correspond au moins au double du volume à vide de rainure (V₂) de la rainure périphérique centrale (8) ayant le plus grand volume à vide de rainure (V₂) .

4. Pneumatique de véhicule utilitaire selon la revendication 3, **caractérisé en ce que** le volume à vide de rainure (V₁) de chaque rainure périphérique du côté de l'épaulement (7) correspond au moins à 2,4 à quatre fois le volume à vide de rainure (V₂) de la rainure périphérique centrale (8) ayant le plus grand volume à vide de rainure (V₂).

5. Pneumatique de véhicule utilitaire selon l'une quelconque des revendications 1 à 4, **caractérisé en ce que** les rainures périphériques centrales (8) présentent des profondeurs moyennes coïncidentes (T₂, T₂' , T₂").

6. Pneumatique de véhicule utilitaire selon l'une quelconque des revendications 1 à 5, **caractérisé en ce que** les rainures périphériques centrales (8) présentent à chaque fois des profondeurs constantes (T₂, T₂', T₂") sur leur périphérie.

7. Pneumatique de véhicule utilitaire selon l'une quelconque des revendications 1 à 6, **caractérisé en ce que** les rainures périphériques centrales (8) présentent des largeurs moyennes coïncidentes (B₂, B₂', B₂").

8. Pneumatique de véhicule utilitaire selon l'une quelconque des revendications 1 à 7, **caractérisé en ce que** les rainures périphériques du côté de l'épaulement (8) présentent des profondeurs moyennes coïncidentes (T₁).

9. Pneumatique de véhicule utilitaire selon l'une quelconque des revendications 1 à 8, **caractérisé en ce que** les rainures périphériques du côté de l'épaulement (8) présentent des profondeurs (T₁) constantes sur leur périphérie.
